# EUROPEAN PATENT SPECIFICATION

(11) **EP 1 805 861 B1**
(45) Date of publication and mention of the grant of the patent: **13.07.2011**
(21) Application number: 05851051.2
(22) Date of filing: 26.10.2005
(51) Int. Cl.: H02H 3/33

(54) **EARTH LEAKAGE CIRCUIT BREAKER**
FEHLERSTROM-SCHUTZSCHALTER
DISJONCTEUR A COURANT DE FUITE A LA MASSE

(30) Priority: 26.10.2004 NL 1027341
(43) Date of publication of application: 11.07.2007
(73) Proprietor: Eaton Industries (Netherlands) B.V., 7559 SC Hengelo (NL)
(72) Inventor: NIEHOFF, Ronaldus, Hendrikus, Maria, NL-7577 MB Oldenzaal (NL)
(74) Representative: Hutter, Jacobus Johannes
(86) International application number: PCT/NL2005/050023
(87) International publication number: WO 2006/065128

(56) References cited:
- EP-A- 0 700 140
- US-A- 4 042 967
- US-A- 4 233 640
- US-B1- 6 807 037

## Description

### Field of the invention

The present invention relates to an earth leakage circuit breaker for use in a safety switch. More in particular, the present invention relates to an earth leakage circuit breaker according to the preamble of Claim 1.

### State of the art

Such an earth leakage circuit breaker is known from US-A-4,233,640, which discloses a ground fault apparatus and protection system. The actuator circuit used in this document is directly supplied with power from a secondary winding of a transformer.

An earth leakage circuit breaker of this type is generally used in an earth leakage safety device. An earth leakage safety device can be fitted with various types of actuator which break one or more contacts in the event of an earth leakage current being detected. Different types of actuator circuit are required for all the different types of actuator. A wide variety of actuator circuits must therefore always be available in order to manufacture a range of products.

### Summary of the invention

The present invention seeks to provide an earth leakage circuit breaker that can be used for various types of actuator which can be used in the earth leakage protection device.

According to the present invention, an earth leakage circuit breaker of the type defined in the preamble is provided having the characterising features of Claim 1. The actuator circuit has a supply circuit where said supply circuit has a capacitive input impedance so that the correct insulation resistance is measured when testing the earth resistance with a DC voltage. In this embodiment, the actuator circuit does not then have to be electrically isolated from the switched connections.

Furthermore, the earth leakage circuit breaker comprises a detection device for detecting an earth leakage current in the electric circuit of the safety switch, an actuator element for breaking the electric circuit of the safety switch, an actuator circuit, connected to the detection device and the actuator element, for energising the actuator element in the event of an earth leakage current in excess of a predefined threshold being detected, where the actuator circuit is provided with a selection connection for selecting the type of actuator element that has to be actuated. In this way an actuator circuit can be used for various types of actuator, with the result that an extensive degree of standardisation is achieved within a product range.

In one embodiment of the present invention, the type of actuator element is a solenoid type and the actuator circuit enables the actuator element by means of a thyristor stage. The thyristor stage can be housed in the actuator circuit, in the actuator itself, or as a stand-alone module.

In a further embodiment, the type of actuator element is a latch type and the actuator circuit enables the actuator element by means of an open collector stage. This open collector stage can easily be housed in the actuator circuit.

In yet another embodiment, the type of actuator element is a piezo element and the actuator circuit enables the actuator element by means of a high-voltage output stage. The high-voltage output stage can also be integrated in the actuator circuit or be provided as a stand-alone module.

The actuator circuit in one embodiment is comprised in an integrated circuit, for example in an ASIC (application-specific integrated circuit). This method enables large numbers of actuator circuits to be manufactured at low cost.

In a further embodiment, the actuator circuit is comprised in an enclosure for surface mounting. Such an SMD version (surface-mounted device) of the actuator circuit is easy to position and takes up little space. As an example, an SO8 enclosure is suitable which takes up even less space. As an alternative embodiment, the actuator circuit can be manufactured in the form of an integrated circuit which is suitable for flip-chip assembly. The bare chip then has raised solder locations or solder bumps and can be mounted on a substrate with the underside facing upwards (hybrid printed circuit board). This embodiment requires even less space.

In a further embodiment, the actuator circuit has a supply circuit where said supply circuit is detachably connected to a phase terminal and a neutral terminal of the safety switch. By connecting the supply circuit to the safety circuit status it is possible to conduct tests such as earth resistance tests or test voltage tests without the risk of damaging the actuator circuit itself.

### Brief description of the drawings

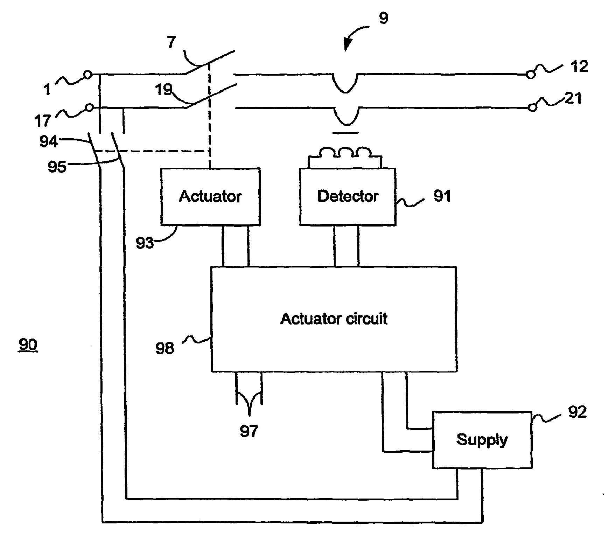

The present invention will now be discussed in more detail on the basis of a number of illustrative embodiments, with reference to the appended drawings, in which
Fig. 1 shows a simplified block diagram of an embodiment of an actuator circuit according to the present invention.

### Detailed description of illustrative embodiments

As shown in Fig.1, the earth leakage circuit breaker 90 comprises a detection device 91 which, in conjunction with a detector coil 9, detects whether an (excessive) earth leakage current is occurring in the electric circuit that is connected to an output phase terminal 12 or an output neutral terminal 21. In the electric circuit, moving contacts 7 and 19 of a switch in which the earth leakage circuit breaker 90 can be used are also shown in the block diagram in Fig. 1. The earth leakage circuit breaker 90 also comprises a supply 92 which is connected to trailing supply contacts 94, 95. The trailing supply contacts close and open synchronously with the main contacts 7 and 19. As a result, the entire earth leakage circuit breaker 90 will be de-energised as soon as the switch 50 is switched off. This has the benefit of enabling the rest of the safety switch 50 to be exposed to high voltages (earth resistance tests at, for example, > 1000 Vdc, or test voltage tests at> 500 Vac) without the necessity for further measures.

An actuator circuit 98 is connected to the detection device 91 and the supply 92 and is set up to energise an actuator 93 to switch off the switch 50. As shown in the block diagram, the actuator 93 acts at the moving contacts 7 and 19 in the phase and neutral terminals, respectively.

The actuator 93 can be an actuator of various types. The use of a solenoid-based actuator in which a generated magnetic force operates a mechanical contact mechanism is known in the art. Actuators that release a stored quantity of energy with the aid of a mechanical latch, for example a moving contact pretensioned by a spring, as a result of which the circuit can be broken with predefined characteristics, are also known in the art. Finally, actuators which utilise the mechanical force that can be generated with the aid of piezo elements are also known in the art.

Each of these types of actuator uses its own, therefore different, means of actuating the actuator 93. A solenoid-based actuator 93 is generally actuated with the aid of a thyristor stage. The mechanical operating force of a solenoid has to be entirely generated by means of the magnetic force generated using a magnetic field. The relatively high mechanical operating force has to be generated by a relatively large magnetic field as a result of which, in conjunction with the design of a solenoid, a relatively large current also flows through the circuit which can be controlled with such a thyristor stage or comparable electronic amplifier. A latch-based actuator 93 is usually adequate with actuation based on an open collector stage since the required (high) mechanical force is generated by a pretensioned stored energy device, for example in the form of a spring, but only a relatively small magnetic field with a corresponding small current is required to unlatch it. An actuator based on piezo elements requires a relatively high voltage but only a small capacitive current. This type of actuator is generally actuated by a voltage-increasing output stage.

For reasons of efficiency, the actuator circuit 98 has been designed such that it can actuate several types of actuator 93 (including the types discussed above). To that end, the actuator circuit 98 is provided with one or more selection connections 97. By means of these selection connections 97 one or more sections of the actuator circuit can be switched off or on in a manner known in the art (for example, by connecting two connections 97 together or connecting one connection 97 to earth or the supply voltage).

The actuator circuit 98 in one embodiment is manufactured as an integrated circuit such as an application-specific integrated circuit (ASIC). This enables a multiplicity of actuator types 93 to be actuated in an earth leakage circuit breaker using just one type of IC (ASIC). This offers many benefits at a logistical level.

With the latch-type actuator, a single open collector stage on the ASIC is sufficient. The solenoid-type actuator requires an output on the ASIC to actuate the external thyristor which in turn actuates the solenoid. The two ASIC outputs have different signal levels and output characteristics. One option is to produce the ASIC such that both types of output circuit are present on the chip and are available by means of a pad on the chip. To select the output circuit, either one of the two pads can be connected (using wire bonding) to a pin on the SO8 enclosure during final assembly. This saves one pin on the SO8 enclosure.

In an illustrative embodiment, the ASIC 98 is housed in an SO8 enclosure. The SO8 enclosure is suitable for surface mounting (SMD) in order to minimise the space taken up on the printed circuit board 26. In light of the number of connections for the actuator circuit, it is possible to use such an enclosure with eight connections. It is also possible to route both output circuits to the outside. Since no 9-pin enclosure exists, it would then be necessary to use the next feasible enclosure instead, which means having to use a 14-pin enclosure that is substantially larger than the 8-pin enclosure. It is possible, of course, to use other enclosures suitable for surface mounting (SMD versions).

In a further embodiment, the actuator circuit 98 is designed in the form of an integrated circuit which is suitable for flip-chip mounting on the printed circuit board 26 (bare chip which is mounted upside-down on the printed circuit board 26). The pads for connecting such a flip-chip element are preferably provided with raised solder locations or solder bumps, as a result of which the chip will make contact with corresponding pads on the printed circuit board 26 as a result of heat action. This embodiment takes up even less space on the printed circuit board 26. In the flip-chip alternative, both pads are available, and it is possible to delay making a choice with regard to the output circuit to be used until production of the hybrid, i.e. at a later stage.

## Claims

1. Earth leakage circuit breaker (90) for use in a safety switch, comprising:
- a detection device (91) for detecting an earth leakage current in the electric circuit of the safety switch;
- an actuator element (93) for breaking the electric circuit of the safety switch;
- an actuator circuit (98), connected to the detection device (91) and the actuator element (93), for energising the actuator element (93) in the event of an earth leakage current in excess of a predefined threshold being detected, where the actuator circuit (98) is provided with a selection connection (97) for selecting the type of actuator element (93) that has to be actuated, and
- a supply circuit (92) for supplying power to the actuator circuit (98),
**characterised in that** the supply circuit (92) has a capacitive input impedance.

2. Earth leakage circuit breaker according to Claim 1, wherein the type of actuator element (93) is a solenoid type and wherein the actuator circuit (98) enables the actuator element (93) by means of a thyristor stage.

3. Earth leakage circuit breaker according to Claim 1, wherein the type of actuator element (93) is a latch type and wherein the actuator circuit (98) enables the actuator element (93) by means of an open collection stage.

4. Earth leakage circuit breaker according to Claim 1, wherein the type of actuator element (93) is a piezo element and wherein the actuator circuit (98) enables the actuator element (93) by means of a high-voltage output stage.

5. Earth leakage circuit breaker according to one of Claims 1 - 4, wherein the actuator circuit (98) is comprised in an integrated circuit.

6. Earth leakage circuit breaker according to Claim 5, wherein the actuator circuit (98) is comprised in an ASIC.

7. Earth leakage circuit breaker according to Claim 5, wherein the actuator circuit (98) is comprised in an enclosure for surface mounting.

8. Earth leakage circuit breaker according to one of Claims 1-4, wherein the actuator circuit (98) in manufactured in the form of an integrated circuit which is suitable for flip-chip assembly.

9. Earth leakage circuit breaker according to one of the preceding claims, further comprising a supply circuit (92) for supplying power to the actuator circuit (98), wherein the supply circuit is detachably connected to a phase terminal (1) and a neutral terminal (17) of the safety switch.

## Patentansprüche

1. Fehlerstrom-Ausschalter (90) zur Verwendung in einem Schutzschalter, umfassend:
- eine Detektionsvorrichtung (91) zum Feststellen eines Fehlerstroms im Stromkreis des Schutzschalters;
- ein Aktorelement (93) zum Unterbrechen des Stromkreises des Schutzschalters;
- eine Aktorschaltung (98), die an die Detektions-vorrichtung (91) und das Aktorelement (93) angeschlossen ist, um das Aktorelement (93) unter Strom zu setzen, falls ein Fehlerstrom, der über eine vordefinierte Schwelle hinausgeht, festgestellt wird, wobei die Aktorschaltung (98) mit einem Auswahlanschluss (97) versehen ist, um den Typ des Aktorelements (93) auszuwählen, das zu betätigen ist, und
- eine Versorgungsschaltung (92) zum Zuführen von Energie zu der Aktorschaltung (98),
**dadurch gekennzeichnet, dass** die Versorgungs-schaltung (92) eine kapazitive Eingangsimpedanz aufweist.

2. Fehlerstrom-Ausschalter nach Anspruch 1, wobei der Typ des Aktorelements (93) ein Elektromagnettyp ist, und wobei die Aktorschaltung (98) das Aktorelement (93) mittels einer Thyristorstufe aktiviert.

3. Fehlerstrom-Ausschalter nach Anspruch 1, wobei der Typ des Aktorelements (93) ein Latch-Typ ist, und wobei die Aktorschaltung (98) das Aktorelement (93) mittels einer Open-Collector-Stufe aktiviert.

4. Fehlerstrom-Ausschalter nach Anspruch 1, wobei der Typ des Aktorelements (93) ein piezoelektrisches Element ist, und wobei die Aktorschaltung (98) das Aktorelement (93) anhand einer Hochspannungs-Ausgangsstufe aktiviert.

5. Fehlerstrom-Ausschalter nach einem der Ansprüche 1 bis 4, wobei die Aktorschaltung (98) in einer integrierten Schaltung enthalten ist.

6. Fehlerstrom-Ausschalter nach Anspruch 5, wobei die Aktorschaltung (98) aus einem ASIC besteht.

7. Fehlerstrom-Ausschalter nach Anspruch 5, wobei die Aktorschaltung (98) in einem Gehäuse für die Oberflächenmontage enthalten ist.

8. Fehlerstrom-Ausschalter nach einem der Ansprüche 1 bis 4, wobei die Aktorschaltung (98) in Form einer integrierten Schaltung hergestellt wird, die sich zur Flip-Chip-Montage eignet.

9. Fehlerstrom-Ausschalter nach einem der vorhergehenden Ansprüche, ferner umfassend eine Versorgungs-schaltung (92) zum Zuführen von Energie zur Aktorschaltung (98), wobei die Versorgungsschaltung an eine Strangklemme (1) und eine Nullleiterklemme (17) des Schutzschalters lösbar angeschlossen ist.

## Revendications

1. Disjoncteur à courant de fuite à la terre (90) pour usage dans un interrupteur de sécurité, comprenant :
- un dispositif de détection (91) pour détecter un courant de fuite à la terre dans le circuit électrique de l'interrupteur de sécurité ;
- un élément d'actionnement (93) pour rompre le circuit électrique de l'interrupteur de sécurité ;
- un circuit d'actionnement (98), connecté au dispositif de détection (91) et à l'élément d'actionnement (93), pour exciter l'élément d'actionnement (93) dans le cas de la détection d'un courant de fuite à la terre dépassant un seuil prédéfini, où le circuit d'actionnement (98) est muni d'une connexion de sélection (97) pour sélectionner le type d'élément d'actionnement (93) qui doit être actionné, et
- un circuit d'alimentation (92) pour alimenter en électricité le circuit d'actionnement (98), **caractérisé en ce que** le circuit d'alimentation (92) a une impédance d'entrée capacitive.

2. Disjoncteur à courant de fuite à la terre selon la revendication 1, dans lequel le type d'élément d'actionnement (93) est du type à solénoïde et dans lequel le circuit d'actionnement (98) active l'élément d'actionnement (93) au moyen d'un étage de thyristor.

3. Disjoncteur à courant de fuite à la terre selon la revendication 1, dans lequel le type d'élément d'actionnement (93) est du type à verrouillage et dans lequel le circuit d'actionnement (98) active l'élément d'actionnement (93) au moyen d'un étage collecteur ouvert.

4. Disjoncteur à courant de fuite à la terre selon la revendication 1, dans lequel le type d'élément d'actionnement (93) est un élément piézoélectrique et dans lequel le circuit d'actionnement (98) active l'élément d'actionnement (93) au moyen d'un étage de sortie haute tension.

5. Disjoncteur à courant de fuite à la terre selon l'une quelconque des revendications 1 à 4, dans lequel le circuit d'actionnement (98) est compris dans un circuit intégré.

6. Disjoncteur à courant de fuite à la terre selon la revendication 5, dans lequel le circuit d'actionnement (98) est compris dans un ASIC.

7. Disjoncteur à courant de fuite à la terre selon la revendication 5, dans lequel le circuit d'actionnement (98) est compris dans une enceinte pour un montage en surface.

8. Disjoncteur à courant de fuite à la terre selon l'une quelconque des revendications 1 à 4, dans lequel le circuit d'actionnement (98) est fabriqué sous la forme d'un circuit intégré qui convient à un assemblage planaire.

9. Disjoncteur à courant de fuite à la terre selon l'une quelconque des revendications précédentes, comprenant en outre un circuit d'alimentation (92) pour alimenter en électricité le circuit d'actionnement (98), dans lequel le circuit d'alimentation est connecté de manière amovible à une borne de phase (1) et à une borne neutre (17) de l'interrupteur de sécurité.
